Europäisches Patentamt

European Patent Office

Office européen des brevets

(11) Publication number: **0 134 724**
A1

# EUROPEAN PATENT APPLICATION

(21) Application number: **84306097.1**

(22) Date of filing: **06.09.84**

(51) Int. Cl.⁴: **B 23 K 11/06**

(30) Priority: **09.09.83 JP 165229/83**
**09.09.83 JP 165230/83**

(43) Date of publication of application:
**20.03.85 Bulletin 85/12**

(84) Designated Contracting States:
**CH DE FR GB LI**

(71) Applicant: **TOYO SEIKAN KAISHA LIMITED
3-1, Uchisaiwai-cho 1-chome Chiyoda-ku
Tokyo(JP)**

(72) Inventor: **Matsuno, Kenji
85-6 Mutsukawa 3-chome Minami-ku
Yokohama-city Kanagawa Prefecture(JP)**

(72) Inventor: **Kuse, Kazuma
179 Ooguchinakamachi Kanagawa-ku
Yokohama-city Kanagawa Prefecture(JP)**

(72) Inventor: **Matsubayashi, Hiroshi
937-104 Tokiwa Kamakura-city
Kanagawa Prefecture(JP)**

(72) Inventor: **Ishibashi, Kazuhisa
55-12 Sangenjaya 2-chome
Setagaya-ku Tokyo(JP)**

(74) Representative: **Blake, John Henry Francis et al,
BROOKES AND MARTIN High Holborn House 52/54 High
Holborn
London WC1V 6SE(GB)**

(54) **Welded can body and method of making same.**

(57) A welded can body (66) made of a steel sheet or a surface treated steel sheet is jointed with a mash seam weld (1, 21, 61). The mash seam weld comprises a heat affected zone (2, 22, 62) continuously formed over the length thereof, and the heat affected zone is apart from at least the inner surface of the mash seam weld.

In a method of making a welded can body (66) having a mash seam weld (1, 21, 61) which includes a heat affected zone (2, 22, 62) extending continuously in the longitudinal direction thereof and is formed with no pitting (48), the weld is formed by mash seam welding a lapped portion (65) of a can body preform (60) made of a steel sheet or a surface treated steel sheet while allowing an alternating current (52) to flow through the lapped portion via a water-cooled elongated electrode (44), and a water-cooled rotary electrode (45). The alternating current has a crest factor satisfying an expression $1.5 \leq Ip/Ie \leq 2.0$, where $Ie$ and $Ip$ designate an effective value and a peak value, respectively, of the alternating current.

FIG.9

./...

FIG. 13

Welded Can Body and Method of Making Same

This invention relates to a welded can body and the method of making same, more particularly to a welded can body made of a steel sheet or a surface treated steel sheet with its side jointed through a mash seam weld and the method of making the welded can body.

Conventionally, a welded can body formed of a sheet whose basis is a low carbon steel sheet has often been so made that the opposite margins of a rectangular blank have overlapped each other to form a side lapped portion, and the lapped portion has been mash seam welded with a sinusoidal current using a pair of roller electrodes with relatively small diameters held in a given position directly or through wire electrodes. When the blank has a surface layer containing an electrically insulating chrome oxide layer such as in case of tinfree steel (electrolytically chromic acid treated steel sheet), to prevent the occurrence of such defects as a splash of a melted metal or the like, normally the mash seam weld has been performed after said surface layer was removed by machining or the like from the margins of the blank.

In case of a surface treated steel sheet like a thin-nickel-plated steel sheet which has had a relatively soft metallic surface layer with a chrome oxide layer thereon, a low-tin tinplate, or a low carbon steel sheet with a relatively thin iron oxide film formed over the margins thereof when the sheet has been baked after a lacquer was coated over its surface except for the areas near the margins, normally the mash seam weld has been directly performed without removing said surface layer.

Conventional mash seam welds described above have had heat affected zones discontinuously arranged in the longitudinal direction of the weld. The regions corresponding to the neighborhoods of the peak values of welding ac are formed with the heat affected zones, where iron atoms near the boundary surfaces of the lapped portion have diffused enough to unite both sides of the lapped portion. The regions corresponding to the neighborhoods of zero values of the welding a.c. are formed with heat unaffected zones, where the temperature has been rather low and therefore the iron atoms have diffused only insufficiently, resulting in a poor unification of the lapped portion.

Therefore, there has arisen such a trouble that, when a working such as beading, necking, or flanging has been performed on the welded can body, the portions of the weld corresponding to the original boundary surfaces in the heat unaffected zones have peeled off to allow the contents filled in the can to leak or to allow the air to enter the can through the peeled portions, resulting in poor sealability. In case of a tinplate with a normal amount of tin coating (from about 1.0 to 10.2 $g/m^2$), however, usually the formation of heat unaffected zones would have hardly caused such defects as described above, because a relatively high amount of tin with a low melting point would have supposedly promoted the diffusion of iron atoms.

Further, in case of conventional mash seam welds, the heat affected zones have been exposed to the surfaces of the welds. Since these heat affected zones have had nonuniform structure containing fine precipitates of carbide (including the one in a prodromal stage) and therefore have been chemically unstable, these zones have been liable to cause corrosion due to the contents in the sealed cans. Therefore, even when the surfaces of the welds have been repaired with organic films, the exposed portions of the heat affected zones tend to be selectively corroded, resulting in defects such as rusting or pinhole corrosion in the welds.

The present invention attempts to provide a welded can body having a mash seam weld of a specific type wherein the foregoing problems have been solved. However, defects called pittings in the specification tend to be produced in the weld of the above type, as described below. The pitting tends to cause rusting or pinhole in the weld during storage, and induce rupture in such a working as beading or the like.

In addition, there has arisen such a problem in the weld of the above type that splashes and/or extrusion of melted metal, produced depending on welding conditions, have made it difficult to repair the welds by coating lacquers or the like, resulting in poor corrosion resistance.

In this specification, the heat affected zone is defined as a region where some change occurred in the structure thereof due to thermal hysteresis during welding, presumably by being heated to a temperature of about 1000°C or above. The boundary surfaces of the lapped portion corresponding to the heat affected zone are united with solid phase weld and/or melt weld to form a firm junction.

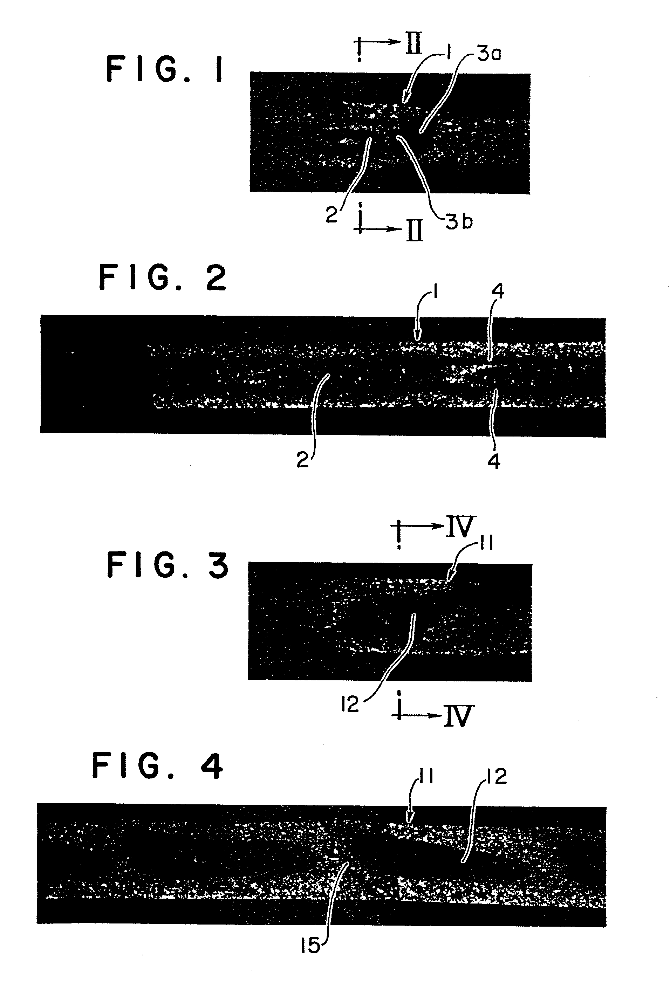

When etched with 5% alcoholic solution of picric acid for 2 minutes, a black area 3a, and a gray and/or white area 3b surrounded by the black area 3a are observed in microscopic photographs (refer to Figs. 1 and 2) of about 50 times magnification. These areas 3a, and 3b constitute the heat affected zone 2 described herein. The black area 3a is supposed to mainly comprise fine precipitates of carbide (including the one in a prodromal stage), and the white area 3b mainly comprise dendrite structure formed by rapid cooling after melting during welding.

According to one aspect of this invention, there is provided a welded can body made of a steel sheet or a surface treated steel sheet, and jointed with a mash seam weld, characterized in that said mash seam weld comprises a heat affected zone continuously formed over the length thereof, and said heat affected zone is apart from at least the inner surface of said mash seam weld.

By means of this invention it is possible to provide in a welded can body with a mash seam weld which is made of a steel sheet or a surface treated steel sheet, the effect that the weld is not caused to peel off or rupture by working such as beading, necking or flanging, and thus does not lead to poor sealability. Further it is possible to provide a welded can body having a mash seam weld which is made of a steel sheet or a surface treated steel sheet, wherein the weld has an improved corrosion resistance.

According to another aspect of the invention there is provided a method of making a welded can body having a mash seam weld which includes a heat affected zone extending continuously in the longitudinal direction thereof and is formed with no pitting, said mash seam weld being formed by mash seam welding a lapped portion of a can body preform made of a steel sheet or a surface treated steel sheet while allowing an alternating current to flow through said lapped portion via a water-cooled elongated electrode, a water-cooled rotary electrode having a radius larger than 50 mm and opposing said elongated electrode, and a first wire electrode and a second wire electrode interposed between said lapped portion and, said elongated electrode and said rotary electrode, respectively, wherein said alternating current has a crest factor satisfying an expression $1.5 \leq Ip/Ie \leq 2.0$, where Ie and Ip designate an effective value and a peak value, respectively, of said alternating current;

a contact length L (in mm) between said lapped portion and said rotary electrode satisfies an expression $3 \text{ mm} \leq L \leq 10 \text{ mm}$; and

a welding pitch P (mm), defined by an equation $P = v/120f$, where v and f designate a welding speed (mm/min) and a frequency (Hz) of said alternating current, satisfies an expression $0.054L + 0.625 \text{ mm} < P < 0.213L + 0.870 \text{ mm}$.

Other effects and advantages of the invention will be apparent from the following description, which, taken in connection with the accompanying drawings, discloses preferred embodiments thereof.

Fig. 1 is a microscopic photograph of a section of the weld of a welded can body which is a first embodiment according to this invention, said section being perpendicular to the longitudinal direction of said weld;

Fig. 2 is a microscopic photograph of a section taken along the line II-II in Fig. 1 and parallel to the longitudinal direction of the weld;

Fig. 3 is a microscopic photograph of a section of the weld of a welded can body which is a first comparative example, said section being perpendicular to the longitudinal direction of the weld;

Fig. 4 is a microscopic photograph of a section taken along the line IV-IV in Fig. 3 and parallel to the longitudinal direction of the weld shown in Fig. 3;

Fig. 5 is a microscopic photograph of a section of the weld of a welded can body which is a second embodiment according to this invention, said section being perpendicular to the longitudinal direction of the weld;

Fig. 6 is a microscopic photograph of a section taken along the line VI-VI in Fig. 5, and parallel to the longitudinal direction of the weld;

Fig. 7 is a microscopic photograph of a section of a weld of the welded can body which is a second comparative example, said section being perpendicular to the weld;

Fig. 8 is a microscopic photograph of a section taken along the line VIII-VIII in Fig. 7, and parallel to the longitudinal direction of the weld;

Fig. 9 is a vertical section of the area near the weld of a welded can body with a pitting, said section being perpendicular to the longitudinal direction of the weld;

Fig. 10 is a microscopic photograph of the longitudinal section of the weld taken along the line X-X in Fig. 9, said section being parallel to the longitudinal direction of the weld;

Fig. 11 is a diagram showing an example of the waveform of welding current applied to the method according to this invention;

Fig. 12 is a diagram showing a preferred ranges of a contact length and a welding pitch in the method according to this invention;

Fig. 13 is an explanatory front view, partly in section, illustrating an example of the process where the welded can body according to this invention is made;

Fig. 14 is a perspective view of an example of a welded can body according to this invention;

Fig. 15 is a circuit diagram of an example of a welding current generator circuit, said current having a crest factor applied to this invention; and

Fig. 16 is a microscopic photograph of a section of a weld of the welded can body which is a third embodiment according to this invention, said section being perpendicular to the longitudinal direction of the weld.

A steel sheet or a surface treated steel sheet for making a welded can body according to this invention includes a low carbon steel sheet, tinfree steel, thin-nickel-plated steel sheet, low-tin tinplate and the like.  After being subjected to outer surface printing or lacquering and to inner surface lacquering on the area other than the neighborhood of the region to be welded, the sheet is baked usually at about 200°C.  In case of a low carbon steel sheet, a very thin, electrically insulating iron oxide layer (normally from about 50 to 400 $\overset{o}{A}$ thick) is formed over the unlacquered area during the baking.

In this specification, a tin plated steel sheet with a tin layer of about 0.3 to 0.8 $g/m^2$ and further with a chrome oxide layer of 3 to 20 $mg/m^2$ in terms of chrome amount thereon is designated as low-tin tinplate, where normally most part of tin is present in the form of a tin-iron alloy layer.  A surface treated steel sheet having an electroplated nickel layer or a nickel-iron alloy layer each containing from about 0.1 to 0.8 $g/m^2$ nickel and further a chrome oxide layer (of about 3  to 20 $mg/m^2$ in terms of chrome amount) formed thereon is referred to as thin-nickel-plated steel sheet.  Further, a surface treated steel sheet having a from about 30 to 300 $mg/m^2$ metallic chrome layer and further a chrome oxide layer (from 5 to 40 $mg/m^2$ in terms of chrome amount) formed thereon is referred to as tinfree steel.

Figs. 1 and 2 show the mash seam weld 1 of a welded can body made of a thin-nickel-plated steel sheet according to this invention (refer to Example 2).  The weld 1 is normally from 1.0 to 1.8 times, preferably from 1.2 to 1.6 times, as thick as the original steel sheet.

In Fig. 1, the heat affected zone 2 (having a black area 3a and a white area 3b surrounded by the black area 3a) is apart from the surface of the weld 1, extending approximately in parallel with the surface. Thus, the heat affected zone 2 is not exposed to the surface of the weld 1. And as shown in Fig. 2, the heat affected zone 2 is continuously and substantially uniformly formed in the longitudinal direction of the weld 1.

A portion containing the white area 3b surrounded by the annular black area 3a in Fig. 1, and a portion containing a white area between upper and lower black stripes 4 extending in parallel with the surface in Fig. 2 are mainly of a dendrite structure formed by being rapidly solidified after melted during welding. The black area 3a and black stripes 4 are mainly of fine precipitates of a carbide (including the one in a prodromal stage). During welding, the temperature reaches 1000°C or above in the above-mentioned portions, where the iron atoms near the original boundary surfaces of the lapped portion diffuse enough to completely unite both sides of the lapped portion together with melt weld and solid phase weld.

Since the heat affected zone which consists of chemically unstable phases and therefore has a relatively low corrosion resistance as described above, is not exposed to the surface of the weld 1, as shown in Figs. 1 and 2, the corrosion resistance thereof is improved as compared with the conventional weld 11 described hereafter. In addition, since the heat affected zone 2 where both sides of the lapped portion are completely united extends continuously and substantially uniformly in the longitudinal direction of the weld 1, the weld 1 would not peel off to cause such a trouble as the leak of liquid contents or the like.

Figs. 3 and 4 show the conventional mash seam weld 11 of a welded can body made of the same thin-nickel-plated steel sheet as the one shown in Fig. 1 (refer to Comparative Example 1). As shown in Fig. 3, the heat affected zone 12 mainly made of a black area (mainly of fine precipitates of carbide) extends obliquely with respect to the surface of the weld, and along the original boundary surfaces of the lapped portion, and both terminal ends of the zone 12 are exposed to the surfaces of the weld 11. Accordingly, the corrosion resistance of the weld 11 will be poor.

Further, as shown in Fig. 4, the heat affected zone 12 is discontinuously formed in the longitudinal direction of the weld 11, and the neighborhoods of the portions corresponding to zero values of welding a.c. constitute heat unaffected zones 15. In these zones 15, the temperature during welding is relatively low (presumably from about 800 to 900°C), and therefore ferrite structure remains, traces of the original boundary surfaces are perceivable, iron atoms near the original boundary surfaces insufficiently diffuse, and a complete unification through solid phase weld is not achieved. Therefore, even when the liquid contents in the can do not leak through a nonworked area of the welded can body, the liquid contents tend to leak in a worked area where beading, necking, or the like has been performed.

Also in cases of a tinfree steel (refer to Example 1 and Fig. 16) having surface layers on the area to be welded left unremoved, and a non-surface treated low carbon steel sheet, the microscopic photograph of whose weld is not shown, the welds with similar structures as in Figs. 1 and 2 will provide improved corrosion resistance and excellent sealability in the worked areas.

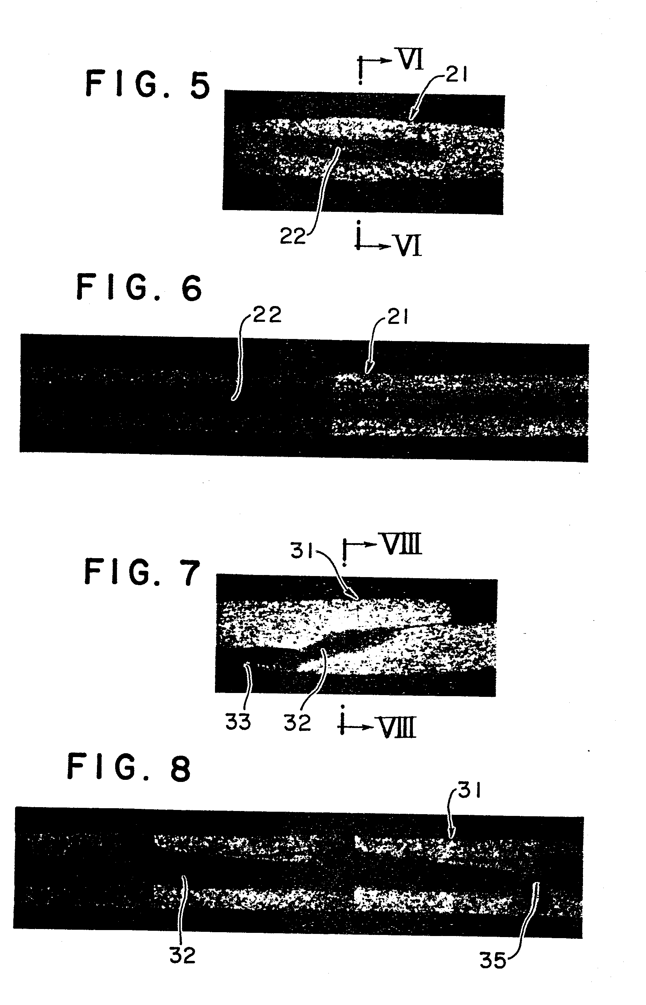

Figs. 5 and 6 show the mash seam weld 21 of a welded can body made of a low-tin tinplate according to this invention, where the etching conditions and magnification are the same as those in Fig. 1 (refer to Example 3). This weld 21 is identical to the weld 1 except that a heat affected zone 22 is substantially formed of only the black area (the area of fine precipitates of a carbide.) It is supposed that this would be due to the fact that a very low amount of tin on the boundary surfaces in the lapped portion promotes a solid phase weld. Thus, a firm weld can be effected without melt welding.

Figs. 7 and 8 show the mash seam weld 31 of a conventional welded can body made of a same low-tin tinplate as in Fig. 6 (refer to Comparative Example 2). The etching conditions and magnification of the metallograph are identical to those of Fig. 1. As shown in Fig. 7, the heat affected zone 32 of a black area is exposed to the surface of the weld 31 to form a protrusion 33 and, as shown in Fig. 8, the heat affected zone 32 discontinuously extends in the longitudinal direction of the weld 31 while intermittently forming heat unaffected zones 35. These zones 35 tend to peel off to cause troubles such as the leakage of contents and the like when subjected to beading, necking, or the like.

A welded can body with a continuous heat affected zone which is not exposed to the surface of the weld as described above can be so made that, using a combination of a cooled elongated electrode and a cooled rotary electrode with a relatively large radius (preferably 50 mm or above), of the type which is disclosed in U.S.P. 4,334,138, preferably via a first and a second wire electrodes interposed between the lapped portion, and the elongated electrode and the rotary electrode, respectively, mash seam welding is performed on the lapped portion, with the inner surface of the can body abutting against or being opposed to the elongated electrode, under appropriate combinations among the welding conditions such as welding force, welding current, waveform and frequency thereof, welding speed, and the like. As shown in can body No. 3 of Comparative Example 1, improper welding conditions would not produce above-mentioned welded can body even when the electrode device of the above type is used.

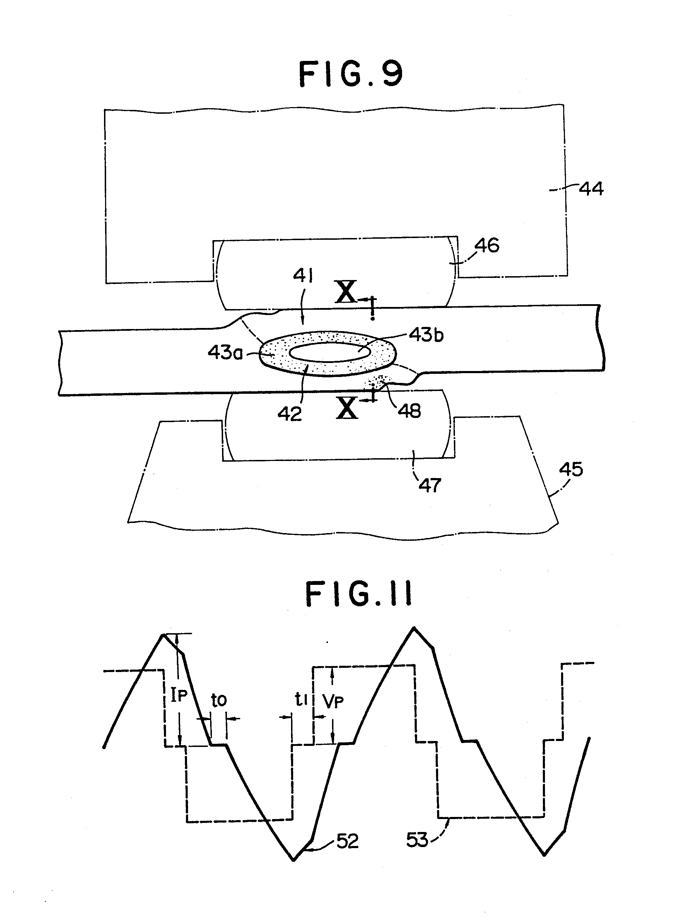

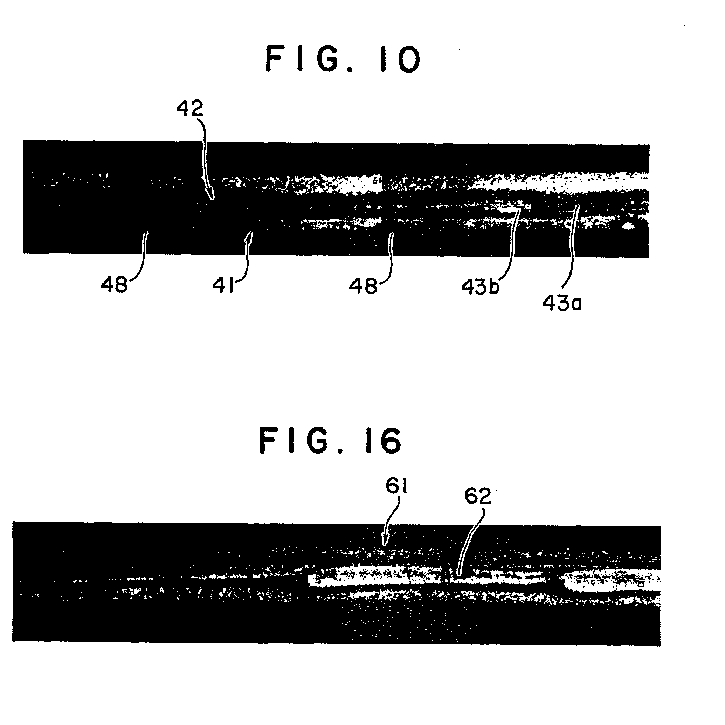

However, it was found that, in this case, when conventional sinusoidal a.c. is used for welding, especially when sinusoidal ac with high frequency is used for highspeed manufacturing of welded can bodies, a surface pitting 48 due to local melt is produced independent of the heat affected zone 42 in the surface of the mash seam weld 41 on the side of the rotary electrode 45, as shown in Figs. 9 and 10 (magnification, X50; both etched with 5% alcoholic solution of picric acid for 2 minutes.)

In the figures, reference numbers 44 and 45 designate elongated and rotary electrodes, respectively, and 46 and 47 wire electrodes made of annealed copper wires rolled flat and, as occasion demands, coated with a low melting point metal, e.g., tin. The pitting 48 is mainly produced in the region normally called a shoulder portion corresponding to the neighborhood of the part where the edge face of one side in the lapped portion and the surface of the other side contact with each other. Reference numbers 43a and 43b denote black and white areas in a heat affected zone 42, respectively.

The pitting 48 not only injures the appearance of a welded can body, but also tends to induce rusting and pinhole corrosion even after the weld 41 has been coated with an organic film, and to cause rupture when the pitting 48 is deep and an area including the pitting 48 has been subjected to beading or the like.

So as to make a welded can body having the weld 1 as shown in Fig. 2 without producing the pitting 48 and yet with a heat affected zone continuously extending in the longitudinal direction of the weld 1, it is necessary to mash seam weld the lapped portion with an alternating current (ac) flowing therethrough, having a crest factor Ip/Ie which satisfies the following expression:

$$1.5 \leq Ip/Ie \leq 2.0 \qquad (1)$$

where Ie and Ip designate an effective value and a peak value, respectively, of the welding ac.

Preferred welding conditions for forming the weld 1 from a lapped portion of from 0.15 to 0.55 mm width at high speed, accordingly with a current of a relatively high frequency (e.g., from 200 to 600 Hz) will be described below.

It is desirable that the mash seam weld 1 be from 1.2 to 1.6 times as thick as the blank which is normally 0.12 to 0.40 mm thick, and the welding force be about 60 to 200 kg.

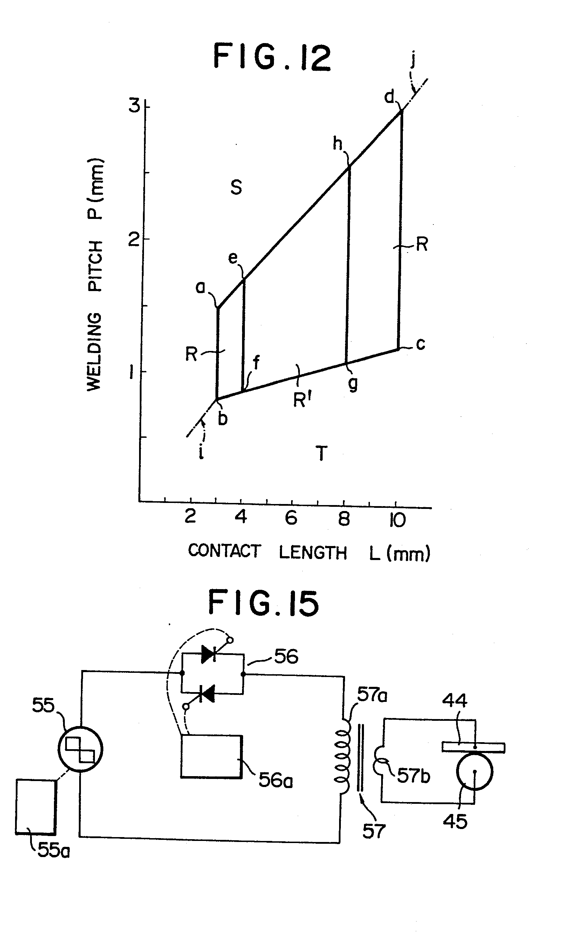

To form a continuous heat affected zone 2, it is desirable that a welding pitch P (mm) (a length of a portion of the weld 1 corresponding to a half-wave length of welding ac) defined by the following equation (2), be relatively long and will exist in an area R surrounded by line segments connecting any two adjacent points with each other among points a, b, c, and d shown in Fig. 12, i.e., be from 0.8 to 3.0 mm long. Further, the welding pitch P preferably exists in an area R' surrounded by line segments connecting any two adjacent points with each other among points e, f, g, and h, i.e., the welding pitch P is preferably from about 0.9 to 2.6 mm long.

$$P = \frac{v}{120f} \qquad\qquad (2)$$

where v and f denote the welding speed (mm/min) and frequency (Hz) of the welding a.c., respectively. The range of a desirable value of the frequency for a given welding speed is determined on the basis of the equation (2).

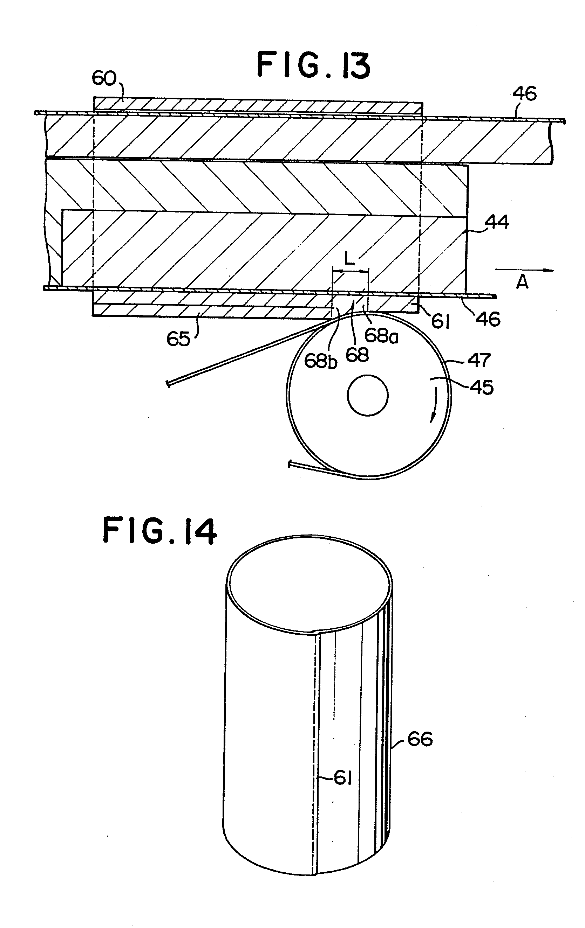

In addition, to form a continuous heat affected zone 2, it is preferable that, in relation to the welding pitch P, a contact length L (mm) shown in Fig. 13 (where flattening of the electrode by the welding force is not taken into consideration) taken in the axial direction between the lapped portion 65 under welding and the rotary electrode 45 be present in the area R shown in Fig. 12, i.e., be from 3 to 10 mm, and desirably be present in the area R', i.e., be from 4 to 8 mm. That is, it is preferable that the welding pitch P (mm) and contact length L (mm) be within the ranges defined by the following expressions (3) and (4):

$$0.054L + 0.625 \text{ mm} < P < 0.213L + 0.870 \text{ mm} \qquad (3)$$

$$3 \text{ mm} \le L \le 10 \text{ mm} \qquad\qquad (4)$$

In an area S above a polygonal line ibadj in Fig. 12, a continuous heat affected zone can not be formed without producing extreme splashes and extrusion of melted iron. On the other hand, in an area T below the polygonal line ibadj, the formation of the heat affected zone requires an excessive welding current which sometimes overheats the surface of the weld, with the possibility of melting it in the extreme case.

It is desirable that, in accordance with the relatively large contact length L described above, the radius of the rotary electrode 45 be 50 mm or above, these electrodes be cooled (normally with water), and wire electrodes (46, 47) be used for preventing the surfaces of the electrodes from wearing.

Elimination of the pitting 48 and splashes in forming a weld having the continuous heat affected zone 2 under the welding conditions described above requires use of a welding current with a waveform having a crest factor which satisfies the above-mentioned expression (1), and preferably the following expression (1a), that is, such a waveform as exemplified in Fig. 11:

$$1.6 \leq Ip/Ie \leq 1.85 \qquad (1a)$$

When the value of $Ip/Ie$ is smaller than 1.5, the pitting 48 tends to be produced. For reference, the crest factor of a sine wave is 1.41. Further, when the crest factor $Ip/Ie$ is larger than 2.0, an instantaneous current becomes so large that an overheated zone develops and thus splashes tend to be produced.

The reason why the pitting tends to be produced when $Ip/Ie$ is smaller than 1.5 is not clear, but may be as follows:

It is estimated that in the region 68 where welding is proceeding in the lapped portion 65 in Fig. 13, as the value of Ip/Ie decreases less than 1.5, a current density through a downstream portion 68a of the region 68, where welding has been substantially completed increases, and a current density through an upstream portion 68b of the region 68, where welding has not yet performed sufficiently decreases by the amount corresponding to the above increment. As a result a growth of a high temperature portion to become the heat affected portion in the welding direction is suppressed in the region 68.

So as to develop the high temperature portion for forming a continuous heat affected portion, it is necessary to increase Ie of the current flowing through the region 68. In this case the surface of the region 68, especially of the downstream portion 68a opposing the rotary electrode 45 where cooling is not sufficient, tends to be overheated, and the pitting will be caused on the above surface when a peak current flows through the downstream portion 68a.

This invention is not restricted to the embodiments described above and, for example, is applicable to a variety of surface treated steel sheets including tinplate with a normal tin coating weight.

Examples according to this invention will be described hereafter together with Comparative Examples.

Example 1

A blank of a 0.22 mm thick tinfree steel with

a 100 mg/m$^2$ thick metallic chrome layer and a 15 mg/m$^2$ thick chromium oxide layer (in terms of chrome amount) was rounded (without removing the chromium surface layer over the margins of the blank) to form a 125.4 mm long can body preform 60 with a 0.35 mm wide lapped portion 65 and 65.3 mm inner diameter as shown in Fig. 13.

The lapped portion 65 of the can body preform 60 was mash seam welded by means of an elongated electrode 44 and a rotary electrode 45 with 75 mm radius via wire electrodes 46 and 47 each formed of an about 2 mm wide flat rolled, annealed copper wire with an oval section and a flat surface abutting against the lapped portion, under the welding conditions mentioned below to make a welded can body 66 with a 0.26 mm thick weld 61 as shown in Fig. 14.

The welding conditions are as follows: The welding force, welding speed, and frequency of welding current are 100 kg, 60 m/min, and 400 Hz, respectively. The waveform 52 of the current is shown in Fig. 11, where $t_0 = 0.17$ msec and $t_1 = 0.2$ msec. The crest factor (Ip/Ie), the effective value (Ie) of the current, and the welding pitch were 1.75, 4.9 kA, and 1.25 mm, respectively.

The welding current with the waveform 52 is preferably produced as described below.

In Fig. 15, a rectangular wave current supply 55, an SCR circuit 56, and a primary coil 57a of a welding transformer 57 are connected in series to constitute a power circuit. Reference numbers 55a and 56a designates control circuit of the supply 55 and SCR circuit 56, respectively. The power supply 55 is so constructed as to generate a voltage with a rectangular waveform 53 shown in Fig. 11 in a broken line.

A secondary coil 57b of the welding transformer 57 is connected to an elongated electrode 44 and a rotary electrode 45.

In the above circuit shown in Fig. 15, turning on the SCR circuit 56 causes a welding current with the waveform 52 to flow through the electrodes 44 and 45. The crest factor $Ip/Ie$ of the welding current can be set by changing a length $t_0$ of the period during which the welding current 52 is zero and/or a length $t_1$ of the period during which the supply voltage 53 is zero by adjusting the control circuits 56a and 55a, respectively. The effective value $Ie$ of the welding current can be set by changing a peak value $vp$ by adjusting the control circuit 55a.

The microscopic structure of the section (magnification, 50; etched with 5% alcoholic solution of picric acid for 2 minutes) of a weld 61 thus obtained in the longitudinal direction thereof is shown in Fig. 16. A heat affected zone 62 is continuously and substantially uniformly formed in the longitudinal direction of the weld 61. There is none of surface pitting.

For comparison, the other two types of welds were formed under the same conditions as above, except for the following. One used a sinusoidal welding current with a crest factor of 1.41 and with an effective value of 5.3 kA, and the other used welding current with a crest factor of 2.1 obtained when $t_1$ = 0.1 msec and $t_0$ = 0.4 msec in Fig. 11 and with an effective value of 4.4 kA.

The microscopic sectional structure of the weld 41 formed with the sinusoidal welding current is shown in Fig. 10. While the heat affected zone is continuous, pittings are observed therein.

When the crest factor was 2.1, while the heat affected zone was also continuous, an extreme splash was produced which was difficult to be satisfactorily repaired by lacquering.

Example 2 and Comparative Example 1

A thin-nickel-plated sheet of 0.24 mm thick with nickel of 600 $mg/m^2$ and chromium oxide thereon of 12 $mg/m^2$ (in terms of chrome amount) was allowed its inner and outer surfaces to be applied with so-called margin coating of an epoxy phenolic lacquer and with so-called margin printing of a printing ink, respectively, except for the areas to be welded, and then baked. Thereafter the sheet was cut into blanks to form can body preforms of 125.5 mm long and 65.3 mm diameter and having a lapped portion of 0.35 mm wide.

The lapped portions of the can body preforms were mash seam welded by a water cooled, elongated electrode and a water cooled rotary electrode (with a 100 mm radius) opposed to the inner and outer surfaces of each lapped portion, respectively, via wire electrodes (each having a width of 2 mm and a flat surface abutting against the lapped portion) formed from annealed copper wires with oval sections, under the welding conditions mentioned in TABLE 1 to prepare welded can bodies Nos. 1, 2 and 3.

For comparison, the lapped portion of the can body preform was mash seam welded in the same manner as above under the welding conditions mentioned in TABLE 1, except for the use of outer and inner rotary electrodes with 110 mm and 60 mm diameters, respectively, opposed to each other, to prepare another welded can body No. 4.

The sectional structures of each welded can body taken in the circumferential direction of the can body and in the longitudinal direction of the weld was observed under a metalloscope. And whether a heat effected zone was exposed to the surface of the weld and was continuous in the longitudinal direction thereof were examined. The results are shown in TABLE 1. Further, with regard to the can bodies No's. 1 and 4, the microscopic structures (magnification, X50) etched with 5% alcoholic solution of picric acid for 2 minutes are shown in Figs. 1, 2 and Figs. 3, 4, respectively.

With regard to each of the can bodies from Nos. 1 to 4, an eight stage multi-beading (4 mm deep, 10 mm pitch) was performed on each of ten can bodies, and a test for the defects which would damage the sealability of the

weld, i.e., a so-called color check test was conducted with a color contrast penetrant in the market (trade name; RED-MARK) on each of the ten can bodies together with the ones which had not been subjected to the beading, and the numbers of poor can bodies are shown in TABLE 1.

As a repairing material, epoxy phenolic lacquer was coated on the inner surface of the weld of each can body in about 7 mm width so that the dried coated film be from 10 to 20 μm thick, and baked. Thereafter eight-multi-beads of 4 mm deep and 10 mm long in the axial direction and flange portions were formed. A tinfree steel bottom end with its inner surface coated with epoxy phenolic lacquer was double seamed in a normal manner to form a vacant can.

The vacant cans filled with pickled mackerel-tomato were double seamed with the same tinfree steel lids as the above-mentioned bottom end and retort-sterilized at 116°C for 90 minutes. After the cans had been stored at 50°C for 6 months, the number of leaked cans per 1000 cans was determined, and the state of corrosion of the inner surfaces of the welds was examined. TABLE 1 shows the results.

TABLE 1

| | | the invention | | comparative example | |
|---|---|---|---|---|---|
| Can body No. | | 1 | 2 | 3 | 4 |
| Welding Condition | welding force (kg) | 100 | 80 | 100 | 50 |
| | welding current[1] (kA) | 5.3 | 4.9 | 6.0 | 2 |
| | welding speed (m/min) | 36 | 45 | 60 | 30 |
| | welding pitch (mm) | 1.2 | 1.5 | 2.0 | 1 |
| exposure of heat affected zone[2] | | no | no | no | yes |
| continuity of heat affected zone[2] | | continuous | continuous | discontinuous | discontinuous |
| filled can storage test result | number of leaked cans | 0 | 0 | 12 | 16 |
| | corrosion state of inner surface of weld | normal | normal | spot like rusting | rusting and pinhole corrosion over the side seam portion |
| number of defective cans according to color check test | no beading | 0 | 0 | 0 | 0 |
| | with beading | 0 | 0 | 4 | 5 |

Note:  (1)  A 250 Hz triangular waveform ac of a crest factor 1.73 was used for can bodies Nos. 1, 2, and 3. A 250 Hz sine waveform ac of a crest factor 1.41 was used for can body No. 4.

(2)  Structures after 2 minute etching with 5% alcoholic solution of picric acid were examined.

Example 3 and Comparative Example 2

Using a 0.24 mm thick low-tin tinplate with tin of 625 mg/m$^2$ and chrome oxide thereon of 14 mg/m$^2$ (in terms of chrome amount), welded can bodies No. 5 according to this invention and No. 6 of a comparative example (the latter being formed by means of a pair of rotary electrodes) were prepared in the same manner as Example 2 and Comparative Example 1, under the welding conditions shown in TABLE 2. The exposure and continuity of the heat affected zone, corrosion resistance, and sealability were evaluated in the same manner as in Example 2. The results are shown in TABLE 2. Further, with regard to the can bodies Nos. 5 and 6, the microscopic structures (magnification, X50) etched with 5% alcoholic solution of picric acid for 2 minutes are shown in Figs. 5, 6 and Figs. 7, 8; respectively.

TABLE 2

| | | the invention | comparative example |
|---|---|---|---|
| Can body No. | | 5 | 6 |
| Welding Condition | welding force (kg) | 80 | 45 |
| | welding current (1) (kA) | 5.3 | 2.2 |
| | welding speed (m/min) | 36 | 30 |
| | welding pitch (mm) | 1.2 | 1 |
| exposure of heat affected zone | | no | yes |
| continuity of heat affected zone | | continuous | discontinuous |
| filled can storage test result | number of leaked cans | 0 | 7 |
| | corrosion state of inner surface of weld | normal | rusting and pinhole corrosion over the side seam portion |
| number of defective cans according to color check test | no beading | 0 | 0 |
| | with beading | 0 | 3 |

Note: (1) For can bodies Nos. 5 and 6, respectively, welding currents of crest factors 1.70 and 1.41 were used.

Claims:

1. A welded can body (66) made of a steel sheet or a surface treated steel sheet and jointed with a mash seam weld (1, 21, 61), characterized in that said mash seam weld comprises a heat affected zone (2, 22, 62) continuously formed over the length thereof, and said heat affected zone is apart from at least the inner surface of said mash seam weld.

2. A welded can body as claimed in claim 1 wherein said heat affected zone (2) comprises a portion (3b) solidified after melted during welding.

3. A welded can body as claimed in claim 1 or claim 2 wherein said surface treated steel sheet is tinfree steel.

4. A welded can body as claimed in claim 1 or claim 2 wherein said surface treated steel sheet is thin-nickel-plated steel sheet.

5. A welded can body as claimed in claim 1 or claim 2 wherein said surface treated steel sheet is low-tin tinplate.

6. A method of making a welded can body (66) having a mash seam weld (1, 21, 61) which includes a heat affected zone (2, 22, 62) extending continuously in the longitudinal direction thereof and is formed with no pitting

(48), said mash seam weld being formed by mash seam welding a lapped portion (65) of a can body preform (60) made of a steel sheet or a surface treated steel sheet while allowing an alternating current (52) to flow through said lapped portion via a water-cooled elongated electrode (44), a water-cooled rotary electrode (45) having a radius larger than 50 mm and opposing said elongated electrode, and a first wire electrode (46) and a second wire (47) electrode interposed between said lapped portion and, said elongated electrode and said rotary electrode, respectively, wherein said alternating current has a crest factor satisfying an expression $1.5 \leq Ip/Ie \leq 2.0$, where Ie and Ip designate an effective value and a peak value, respectively, of said alternating current;

a contact length L (in mm) between said lapped portion and said rotary electrode satisfies an expression $3 \text{ mm} \leq L \leq 10 \text{ mm}$; and

a welding pitch P (mm), defined by an equation $P = v/120f$, where v and f designate a welding speed (mm/min.) and a frequency (Hz) of said alternating current, satisfies an expression $0.054L + 0.625 \text{ mm} < P < 0.213L + 0.870 \text{ mm}$.

7. A method of making a welded can body as claimed in claim 6, wherein the width of said lapped portion is 0.15 to 0.55 mm.

8.  A method of making a welded can body as claimed in claim 7, wherein the thickness of said mash seam weld is 1.2 to 1.6 times as thick as said steel sheet or said surface treated steel sheet.

9.  A method of making a welded can body as claimed in claim 8, wherein said mash seam weld is formed under a welding force of about 60 to 200 kg.

FIG. 1

FIG. 2

FIG. 3

FIG. 4

FIG. 5

FIG. 6

FIG. 7

FIG. 8

# FIG.9

# FIG.11

FIG. 10

FIG. 16

# FIG.12

# FIG.15

## FIG. 13

## FIG. 14

| | European Patent Office | EUROPEAN SEARCH REPORT | Application number |
|---|---|---|---|

EP 84306097.1

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | US - A - 4 376 884 (GOLD)<br>* Fig. 1-3; column 7 *<br>-- | 1 | B 23 K 11/06 |
| A,D | US - A - 4 334 138 (MATSUNO)<br>* Fig. 11; column 12, lines 13-40 *<br>-- | 1-9 | |
| A | US - A - 3 654 422 (ERLANDSON)<br>* Fig. 17 *<br>---- | 1 | |
| | | | **TECHNICAL FIELDS SEARCHED (Int Cl.4)**<br><br>B 23 K 11/00 |

The present search report has been drawn up for all claims

| Place of search | Date of completion of the search | Examiner |
|---|---|---|
| VIENNA | 13-11-1984 | BENCZE |